# EUROPEAN PATENT APPLICATION

(11) **EP 1 806 910 A1**
(43) Date of publication of application: **11.07.2007**
(21) Application number: 07000103.7
(22) Date of filing: 04.01.2007
(51) Int. Cl.: H04M 3/42, H04Q 7/24

(54) **Call processing system and method based on dual mode terminal**

(30) Priority: 09.01.2006 KR 20060002347
(71) Applicant: Samsung Electronics Co., Ltd., Suwon-si, Gyeonggi-Do (KR)
(72) Inventor: Ko, Chae-Ho 408-1303, Yeongtong-gu Suwon-si Gyeonggi-do (KR); Lee, Soon-Phil 131-1002, Seongnam-si Gyeonggi-do (KR)
(74) Representative: Lang, Johannes

(57) **Abstract**

A call processing system and method are based on a dual mode terminal. The call processing system comprises: a Private Branch Exchange (PBX) which, when a call is incoming to an extension through a first network, checks registration information based on a link test message transmitted periodically from a destination terminal having a number of the extension to which the call is incoming, and processes the incoming call in real time; and a dual mode terminal which is interconnected to an extension of the PBX, operates in at least one of a Wireless Local Area Network (WLAN) mode and a wireless communication mode, and processes the incoming call.

## Description

### BACKGROUND OF THE INVENTION

### Technical Field

The present invention relates to a call processing system and method based on a dual mode terminal.

### Related Art

In general, a Private Branch Exchange (PBX) is a telephone system within an establishment that switches calls between users on local lines while allowing all users to share a certain number of external phone lines. PBXs were originally based on analog technology, but presently they use digital technology.

PBXs provide cost savings in requiring a line for each user. For a small enterprise, alternatives to the PBX include a key telephone system using a primary rate Integrated Services Digital Network (ISDN).

Recently, there has been an increase in the use of systems in which an ordinary mobile communication terminal is allowed to interconnect to an extension of the PBX, thereby providing both the extension and central office line to workers inside a building and on the premises outside the building.

Specifically, when a concerned subscriber (or a mobile phone) is registered as a subscriber of the PBX, services can be provided only to the subscriber of the PBX. Furthermore, an incoming call is adapted to be connected to a mobile phone number only when the concerned subscriber inputs call forwarding with respect to the mobile phone number in the PBX.

Thus, in order to detect the presence of a concerned subscriber in the PBX, an attempt is made to connect the incoming call to the extension for a preset time. However, if there is no reply, the incoming call is adapted to be connected to the mobile phone number, which inconveniences the concerned subscriber. At the same time, because the incoming call is connected to the mobile phone number after lapse of the preset time, it takes the concerned subscriber more or less time to communicate with a caller.

In other words, it is impossible to detect whether the existing mobile phone is present within a service area of the PBX. Therefore, in the case of the existing mobile phone, when the incoming call is connected, an incoming call message is sent to a concerned extension number for a preset time. Then, without a reply, it is not until the preset time has lapsed that the call is forwarded to a central office number.

### SUMMARY OF THE INVENTION

It is an object of the present invention to provide a call processing system and method based on a dual mode terminal, in which system and method a mobile communication terminal is interconnected to any extension of a Private Branch Exchange (PBX) supported by a Wireless Local Area Network (WLAN) interface, thereby connecting an incoming call in real time regardless of whether the terminal is located inside or outside of a service area of the PBX.

According to an aspect of the present invention, a call processing system comprises: a PBX which, when a call is incoming to an extension through a first network, checks registration information based on a link test message transmitted periodically from a destination terminal having a number of the extension to which the call is incoming, and processes the incoming call in real time; and a dual mode terminal which is interconnected to the extension of the PBX, operates in at least one of a WLAN mode and a wireless communication mode, and processes the incoming call.

In this regard, the PBX connects the incoming call to the extension number of the destination terminal when the link test message is periodically transmitted from the dual mode terminal, and forwards the incoming call to a central office number matched to the extension number of the destination terminal when the link test message is not periodically transmitted.

Furthermore, the PBX comprises: an extension/central office number match database for storing at least one of an extension number of at least one dual mode terminal registered as the extension, a central office number matched to the extension number, and information on an extension/central-office-line call processing state; and a call processing control module for connecting the incoming call to the extension or central office line of a corresponding terminal in real time based on the extension/central-office-line call processing state information matched to the extension number of the incoming call.

Furthermore, the call processing control module connects the incoming call to the extension number of the destination terminal when the link test message is periodically transmitted from the dual mode terminal, and forwards the incoming call to the central office number matched to the extension number of the destination terminal when the link test message is not periodically transmitted.

In addition, the call processing control module sets the extension/central-office-line call processing state information of the corresponding terminal to a registered state when the link test message is periodically transmitted from the dual mode terminal, and sets the extension/central-office-line call processing state information of the corresponding terminal to an unregistered state when the link test message is not periodically transmitted.

Moreover, the dual mode terminal comprises: a WLAN processing module operating in the WLAN mode to process the incoming call when located within a WLAN service area of the PBX; and a wireless communication module operating in the wireless communication mode to process the incoming call through a second network interworking with the first network when located outside of the WLAN service area of the PBX.

In this regard, the WLAN mode may be a wireless fidelity (WiFi) mode, and the wireless communication mode may be a Code Division Multiple Access (CDMA) or Global System for Mobile Communications (GSM) mode.

According to another aspect of the present invention, a Private Branch Exchange (PBX) comprises: an extension/central office number match database for storing at least one of an extension number of at least one dual mode terminal registered as an extension, a central office number matched to the extension number, and information on an extension/central-office-line call processing state; and a call processing control module for checking the extension/central-office-line call processing state information based on a link test message periodically transmitted from a destination terminal having the extension number of an incoming call, and for connecting the incoming call to the extension or central office line of a corresponding terminal in real time.

In this respect, the call processing control module connects the incoming call to the extension number of the destination terminal when the link test message is periodically transmitted from the dual mode terminal, and forwards the incoming call to the central office number matched to the extension number of the destination terminal when the link test message is not periodically transmitted.

Furthermore, the call processing control module sets the extension/central-office-line call processing state information of the corresponding terminal to a registered state when the link test message is periodically transmitted from the dual mode terminal, and sets the extension/central-office-line call processing state information of the corresponding terminal to an unregistered state when the link test message is not periodically transmitted.

According to still another aspect of the present invention, a dual mode terminal comprises: a Wireless Local Area Network (WLAN) processing module operating in a WLAN mode to process an incoming call when located within a WLAN service area of a Private Branch Exchange (PBX); and a wireless communication module operating in a wireless communication mode to process the incoming call when located outside of the WLAN service area of the PBX.

According to yet another aspect of the present invention, a call processing method comprises the steps of: when a call is incoming to an extension, checking registration information of a corresponding terminal based on a link test message transmitted periodically; and connecting the incoming call to an extension number when the corresponding terminal is registered, and forwarding the incoming call to a central office number matched to the extension number when the corresponding terminal is not registered.

In this respect, the step of checking registration information of the corresponding terminal comprises: setting information on an extension/central-office-line call processing state of the corresponding terminal to a registered state when the link test message is periodically transmitted from the dual mode terminal; and setting the extension/central-office-line call processing state information of the corresponding terminal to an unregistered state when the link test message is not periodically transmitted.

Furthermore, the call processing method comprises the step of operating, by means of the corresponding terminal, in a Wireless Local Area Network (WLAN) mode to process the incoming call when the incoming call is connected to the extension number.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings, in which like reference symbols indicate the same or similar components, wherein:
FIG. 1 is a flowchart of one example of a call processing procedure in a Private Branch Exchange (PBX);
FIG. 2 is a diagram illustrating a call processing system based on a dual mode terminal in accordance with an exemplary embodiment of the present invention;
FIG. 3 is a block diagram of the configuration of a PBX of FIG. 2;
FIG. 4 is a block diagram of the configuration of a dual mode terminal of FIG. 2; and
FIG. 5 is a flowchart of a call processing procedure in a call processing system based on a dual mode terminal in accordance with an exemplary embodiment of the present invention.

### DETAILED DESCRIPTION OF THE INVENTION

Hereinafter, exemplary embodiments of the present invention will be described in full detail with reference to the accompanying drawings. It should be noted that, in the drawings, the same reference symbols refer to identical parts although illustrated in other drawings. In the following description, a detailed description of known functions and configurations incorporated herein has been omitted when it may render the subject matter of the present invention obscure.

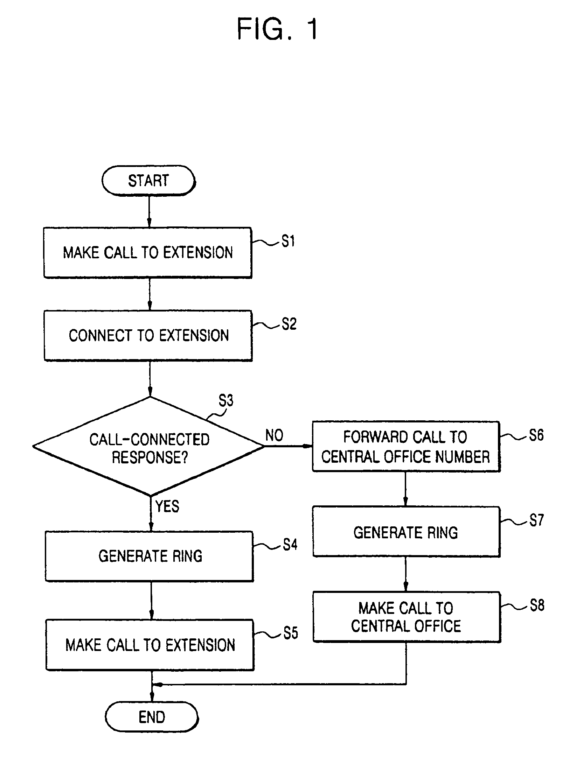

FIG. 1 is a flowchart of one example of a call processing procedure in a Private Branch Exchange (PBX).

Referring to FIG. 1, a user registers his/her mobile phone as any extension of a PBX first. In this state, when a call is incoming to the extension through a Public Switched Data Network (PSDN) (S1), the PBX connects the incoming call to a corresponding extension (S2).

Subsequently, it is determined whether a call-connected response is received through a corresponding extension number (S3). If the call-connected response is received through the corresponding extension number, a ring is generated from the subscriber's mobile phone registered as the corresponding extension number (S4). Thereby, a corresponding callee normally receives an extension call (S5).

Meanwhile, in step S3 of determining whether the call-connected response is received through the corresponding extension number, if the call-connected response is not received through the corresponding extension number for a predetermined time, the incoming call is forwarded to a previously registered central office number of the callee (S6).

Thus, a ring is generated from the subscriber's mobile phone registered as the corresponding extension number (S7). Thereby, the callee normally receives a central office call (S8).

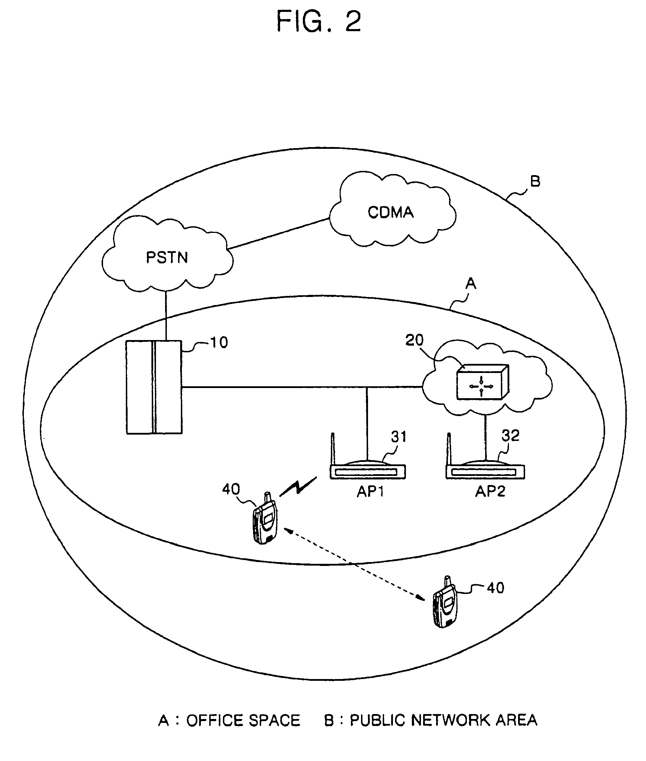

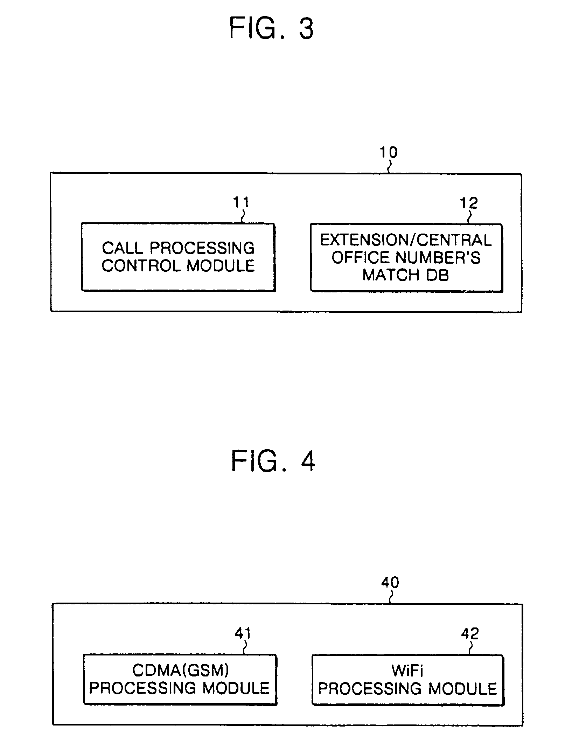

FIG. 2 is a diagram illustrating a call processing system based on a dual mode terminal in accordance with an exemplary embodiment of the present invention, FIG. 3 is a block diagram of the configuration of a PBX of FIG. 2, and FIG. 4 is a block diagram of the configuration of a dual mode terminal of FIG. 2.

Referring to FIG. 2, a call processing system based on a dual mode terminal comprises a PBX 10, a WLAN switch 20, access points (APs) 31 and 32, and a dual mode phone 40. In this regard, A represents an office space and B represents a public network area, for example a Code Division Multiple Access (CDMA) area.

The PBX 10 is a switching system in which a WLAN interface interworking with the APs 31 and 32 through the WLAN switch 20 is possible and is installed in the office space A. The PBX 10 periodically transmits/receives a link test message to/from the dual mode phone 40 through the APs 31 and 32 switched by the WLAN switch 20, thereby determining whether the dual mode phone 40 is registered in real time.

In other words, when a call is incoming to the extension through the public network (e.g. a Public Switched Telephone Network (PSTN)), first, the PBX 10 determines whether to perform call processing by connecting the incoming call to an extension number of the callee's dual mode phone 40 or by connecting the incoming call to a central office number of the callee's dual mode phone 40 according to the transmission or reception of the link test message.

If the callee's dual mode phone 40 is registered in a database of the PBX 10, the incoming call is processed by connecting it to the extension number of the callee's dual mode phone 40. In contrast, if it is determined that the callee's dual mode phone 40 is not registered in the database of the PBX 10, the incoming call is processed by connecting it to the central office number of the callee's dual mode phone 40.

In this regard, when connected to the extension number, the dual mode phone 40 can operate in a Wireless Fidelity (WiFi) or WLAN mode, and thus connect the incoming call to the extension number.

A detailed configuration of the PBX 10 performing such a function will be described below with reference to FIG. 3.

As illustrated in FIG. 3, the PBX 10 of the present invention is generally composed of a call processing module 11 and a match database 12 for extension numbers and central office numbers.

When receiving an incoming call to an extension through a public network (e.g. a PSTN), first, the call processing module 11 retrieves the match database 12 and checks the extension number of the received incoming call, the central office number matched to the extension number, and information on the registration of a PBX 10.

As a result, when an item of the registration information of the PBX 10 is designated as "Yes," it means that a corresponding dual mode phone 40 is located within a WLAN service area of the PBX 10, and thus the incoming call is connected to a corresponding extension number.

However, when the item of the registration information of the PBX 10 is designated as "No," it means that a corresponding dual mode phone 40 is not located within the WLAN service area of the PBX 10, and thus the received incoming call is forwarded to a central office number matching the corresponding extension number.

The match database 12 is a table information database consisting of the extension numbers and central office numbers of the dual mode phones, each of which is registered as an extension of the PBX 10 for a dual mode operation, as well as the items indicating the registration information of the PBX 10. The following Table 1 illustrates one example of a match table information database for the extension numbers and central office numbers.

**Table 1**

| Extension No. | Central Office No. | Registration Information of PBX |
|---|---|---|
| 1000 | 01x-1234-5678 | Yes |
| 1001 | 01x-9876-5432 | No |
| 1002 | 01x-5678-9012 | No |

When the dual mode phone 40 is connected to the extension number of the PBX 10, and when the dual mode phone 40 is not located within the WLAN service area of the PBX 10, the PBX 10 requires a match table database as in Table 1 in which the extension numbers and the central office numbers are matched to each other in order to originate a call to the central office number matched to the connected extension number.

As in Table 1, among items of the match table information database, the extension number refers to that of the PBX of the dual mode phone 40, and the central office number refers to an actual central office number of the dual mode phone 40.

The registration information of the PBX item is provided to indicate whether or not a corresponding dual mode phone 40 is currently registered in the PBX 10. Thus, when the dual mode phone 40 is registered in the PBX 10, the item is represented by "Yes," and when it is not, "No."

In the latter regard, when the dual mode phone 40 is registered in the PBX 10 (i.e. when the item of the registration information of the PBX 10 is represented by "Yes"), it means that a link test message is normally received from the dual mode phone 40 to the PBX 10. In contrast, when the dual mode phone 40 is not registered in the PBX 10 (i.e. when the item of the registration information of the PBX 10 is represented by "No"), it means that a link test message is not received by the PBX 10 from the dual mode phone 40. In other words, the registration information of the PBX 10 (the item "Yes" or "No") is updated in real time according to whether or not the link test message transmitted from each dual mode phone is received.

For example, in the case where the dual mode phone 40 is registered as the extension number 1000 of the PBX 10 as seen in Table 1, the dual mode phone 40 is currently registered in the PBX system 10, the registration information of which is the item "Yes." Hence, when an incoming call to an extension is connected to the extension number 1000 of the PBX 10, the dual mode phone 40 registered as the extension number 1000 operates as an extension WiFi (or WLAN) phone of the PBX 10, and is connected to the extension number 1000 by the incoming call.

In the case of the dual mode phone 10 registered as the extension number 1001 of the PBX 10, the PBX registration information item is "No," indicating that the dual mode phone 40 is not currently registered in the PBX 10. Hence, when an incoming call is connected to extension number 1001 of the PBX 10, the PBX 10 immediately forwards the incoming call to the central office number "01x-9876-5432" of the dual mode phone 40 registered as the extension number 1001.

Similarly, in the case of the dual mode phone 40 registered as the extension number 1002 of the PBX 10, the PBX registration information item is "No," indicating that the dual mode phone 40 is not currently registered in the PBX 10. Hence, when an incoming call is connected to extension number 1002 of the PBX 10, the PBX 10 immediately forwards the incoming call to the central office number "01x-5678-9012" of the dual mode phone 40 registered as the extension number 1002.

Meanwhile, the WLAN switch 20 is connected to the PBX 10 and the APs 31 and 32 through a LAN cable, and performs switching so that the PBX 10 can connect an incoming call requested through the public network to the callee's dual mode phone 40 located within the WLAN service area of the PBX 10.

The APs 31 and 32 are connected with the WLAN switch 20 through the LAN cable, and enable WLAN service between the PBX 10 and the callee's dual mode phone 40 located within the WLAN service area of the PBX 10.

The callee's dual mode phone 40 is assigned an extension number of the PBX 10 and registered as an extension for dual mode operation. To be more specific, the callee's dual mode phone 40 operates as a WiFi phone equipped with a WLAN function when located within the WLAN service area of the PBX 10, and as a CDMA terminal when not located within the WLAN service area of the PBX 10.

A detailed configuration of the dual mode phone 40 performing such functions will be described below with reference to FIG. 4.

As illustrated in FIG. 4, the dual mode phone 40 is generally composed of a CDMA (GSM) processing module 41 and a WiFi processing module 42.

The CDMA (GSM) processing module 41 processes a call forwarded to a central office number through a CDMA network operating with a PSTN according to the call control of the PBX 10 when the dual mode phone 40 is not located within the WLAN service area of the PBX system.

The WiFi processing module 42 operates in the WLAN (or WiFi) mode when the dual mode phone 40 is located within the WLAN service area of the PBX system, and processes a call which is switched by the WLAN switch 20 and connected through the corresponding AP 31 according to the call control of the PBX 10.

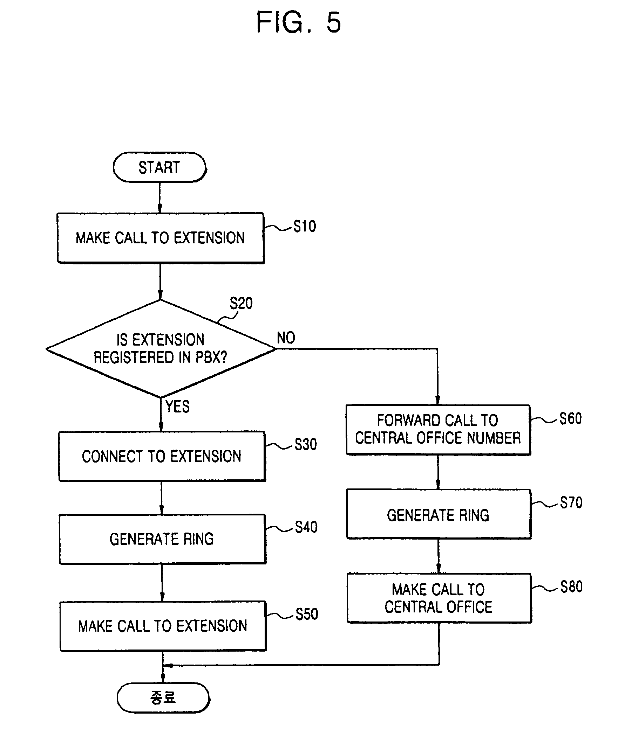

FIG. 5 is a flowchart of a call processing procedure in a call processing system based on a dual mode terminal in accordance with an exemplary embodiment of the present invention.

Referring to FIG. 5, first, in the state wherein a user is assigned an extension number of the PBX 10 and registers his/her dual mode phone 40, when a call is incoming to the extension through the PSTN (S10), the PBX 10 determines whether or not the dual mode phone 40, to which the call is incoming, is registered in the PBX 10 (S20).

If the dual mode phone 40 is registered in the PBX 10, the incoming call is connected to the corresponding extension number because the dual mode phone 40 is located within the WLAN service area (S30). At this point, the dual mode phone 40 operates as a WiFi (or WLAN) phone.

Thus, the dual mode phone 40, operating as a WiFi (or WLAN) phone, transmits a ring to the extension in response to the incoming call (S40), and thereby a corresponding callee normally receives an extension call through his/her dual mode phone 40 (S50).

Meanwhile, in step S20 of determining whether or not the dual mode phone 40, to which the call is incoming, is registered in the PBX 10, if the dual mode phone 40 is not registered in the PBX 10, the incoming call is forwarded to the callee's central office number which is already registered with information of a match table database because the dual mode phone 40 is located outside of the WLAN service area (S60). At this point, the dual mode phone 40 operates as a CDMA phone.

Thus, the dual mode phone 40, operating as a CDMA phone, generates a ring in response to the forwarded call (S70), and thereby a corresponding callee normally receives a central office call through his/her dual mode phone 40 (S80).

In this manner, in the present invention, when a dual mode phone 40 is registered as a subscriber of the PBX 10, it can be determined, through a periodical link test message between the dual mode phone 40 and the PBX 10, whether or not the dual mode phone 40 is registered in the PBX 10, or whether or not the dual mode phone 40 is located outside of the service area of the PBX 10.

Therefore, when a call is incoming, the incoming call is immediately connected to the dual mode phone 40 registered as the extension of the PBX 10 when the dual mode phone 40 is located within the service area of the PBX 10, and the incoming call is automatically call-forwarded to the central office number of the dual mode phone 40 when the dual mode phone 40 is located outside of the service area of the PBX 10. Accordingly, the subscriber of the dual mode phone 40 can respond to the incoming call in real time anywhere and anytime without restriction as to location, the incoming call being connected to either his/her office telephone number or his/her mobile phone number.

According to the present invention, the location of the dual mode phone 40, interconnected to the extension of the PBX 10, is determined in real time, and then an incoming call is immediately connected in real time regardless of whether the terminal is located inside or outside of the service area of the PBX 10. Thereby, the incoming call can be rapidly switched to the callee regardless of the location of the subscriber.

Although exemplary embodiments of the present invention have been described with reference to the attached drawings, the present invention is not limited to these embodiments, and it will be appreciated by those skilled in the art that a variety of modifications and changes can be made without departing from the spirit and scope of the present invention.

## Claims

1. A call processing system, comprising:
a Private Branch Exchange (PBX) which, when a call is incoming to an extension of the PBX through a first network, checks registration information based on a link test message transmitted periodically from a destination terminal having an extension number of the extension to which the call is incoming, and processes the incoming call in real time; and
a dual mode terminal which is interconnected to the extension of the PBX, operates in at least one of a wireless local area network (WLAN) mode and a wireless communication mode, and processes the incoming call.

2. The call processing system according to claim 1, wherein the PBX connects the incoming call to the extension number of the destination terminal when the link test message is periodically transmitted from the destination terminal, and forwards the incoming call to a central office number matched to the extension number of the destination terminal when the link test message is not periodically transmitted.

3. The call processing system according to claim 1, wherein the PBX comprises:
an extension/central office number match database for storing at least one of an extension number of at least one dual mode terminal registered as the extension, a central office number matched to the extension number, and information on an extension/central-office-line call processing state; and
a call processing control module for connecting the incoming call to one of the extension and a central office line of a corresponding terminal in real time based on the information on the extension/central-office-line call processing state matched to the extension number of the incoming call.

4. The call processing system according to claim 3, wherein the call processing control module connects the incoming call to the extension number of the destination terminal when the link test message is periodically transmitted from the dual mode terminal, and forwards the incoming call to the central office number matched to the extension number of the destination terminal when the link test message is not periodically transmitted.

5. The call processing system according to claim 3, wherein the call processing control module sets the information on the extension/central-office-line call processing state of the corresponding terminal to a registered state when the link test message is periodically transmitted from the dual mode terminal, and sets the information on the extension/central-office-line call processing state of the corresponding terminal to an unregistered state when the link test message is not periodically transmitted.

6. The call processing system according to claim 1, wherein the dual mode terminal comprises:
a WLAN processing module operating in the WLAN mode to process the incoming call when located within a WLAN service area of the PBX; and
a wireless communication module operating in the wireless communication mode to process the incoming call through a second network operating with the first network when located outside of the WLAN service area of the PBX.

7. The call processing system according to claim 6, wherein the WLAN mode is a wireless fidelity (WiFi) mode.

8. The call processing system according to claim 6, wherein the wireless communication mode is one of a Code Division Multiple Access (CDMA) mode and a Global System for Mobile Communications (GSM) mode.

9. A Private Branch Exchange (PBX), comprising:
an extension/central office number match database for storing at least one of an extension number of at least one dual mode terminal registered as an extension, a central office number matched to the extension number, and information on an extension/central-office-line call processing state; and
a call processing control module for checking the information on the extension/ central-office-line call processing state based on a link test message periodically transmitted from a destination terminal having an extension number of an incoming call, and for connecting the incoming call to one of an extension and a central office line of a corresponding terminal in real time.

10. The PBX according to claim 9, wherein the call processing control module connects the incoming call to the extension number of the destination terminal when the link test message is periodically transmitted from the dual mode terminal, and forwards the incoming call to the central office number matched to the extension number of the destination terminal when the link test message is not periodically transmitted.

11. The PBX according to claim 9, wherein the call processing control module sets the extension/central-office-line call processing state information of the corresponding terminal to a registered state when the link test message is periodically transmitted from the dual mode terminal, and sets the extension/central-office-line call processing state information of the corresponding terminal to an unregistered state when the link test message is not periodically transmitted.

12. A dual mode terminal, comprising:
a Wireless Local Area Network (WLAN) processing module operating in a WLAN mode to process an incoming call when located within a WLAN service area of a Private Branch Exchange (PBX); and
a wireless communication module operating in a wireless communication mode to process the incoming call when located outside of the WLAN service area of the PBX.

13. The dual mode terminal according to claim 12, wherein the WLAN mode is a wireless fidelity (WiFi) mode.

14. The dual mode terminal according to claim 12, wherein the wireless communication mode is one of a Code Division Multiple Access (CDMA) and a Global System for Mobile Communications (GSM) mode.

15. A call processing method, comprising the steps of:
when a call is incoming to an extension, checking registration information of a corresponding terminal based on a link test message transmitted periodically; and
connecting the incoming call to an extension number when the corresponding terminal is registered, and forwarding the incoming call to a central office number matched to the extension number when the corresponding terminal is not registered.

16. The call processing method according to claim 15, wherein the step of checking the registration information of the corresponding terminal comprises the steps of:
setting information on an extension/central-office-line call processing state of the corresponding terminal to a registered state when the link test message is periodically transmitted from a dual mode terminal; and
setting the information on the extension/central-office-line call processing state of the corresponding terminal to an unregistered state when the link test message is not periodically transmitted.

17. The call processing method according to claim 15, further comprising the step of operating, at the corresponding terminal, in a Wireless Local Area Network (WLAN) mode to process the incoming call when the incoming call is connected to the extension number.

18. The call processing method according to claim 17, wherein the WLAN mode is a wireless fidelity (WiFi) mode.

19. The call processing method according to claim 15, further comprising the step of operating, at the corresponding terminal, in a wireless communication mode to process the incoming call when the incoming call is forwarded to the central office number.

20. The call processing method according to claim 19, wherein the wireless communication mode is one of a Code Division Multiple Access (CDMA) and a Global System for Mobile Communications (GSM) mode.
